# EUROPÄISCHE PATENTANMELDUNG

(11) **EP 1 187 439 A2**
(43) Veröffentlichungstag der Anmeldung: **13.03.2002**
(21) Anmeldenummer: 01120176.1
(22) Anmeldetag: 22.08.2001
(51) Int. Cl.: H04M 3/42

(54) **Verfahren und Kommunikationseinrichtung zur Unterstützung verschiedener "Computer Supported Telecommunication Application"-Phasen**

(30) Priorität: 08.09.2000 DE 10044417
(71) Anmelder: SIEMENS AKTIENGESELLSCHAFT, 80333 München (DE)
(72) Erfinder: de Clercq, Freddy, 8020 OOstkamp (BE); Rist, Claus, 44795 Bochum (DE)

(57) **Zusammenfassung**

Gemäß dem erfindungsgemäßen Verfahren werden Nachrichten (NAR) zwischen einer Kommunikationseinrichtung (SYS)und einer CSTA-Anwendung (ANW) über eine CSTA-Schnittstelle (SST) ausgetauscht wobei die Nachricht (NAR) aus zumindest zwei Teilen (PA1, PA2) aufgebaut wird, die unterschiedlichen CSTA-Phasen zugeordnet werden.

## Beschreibung

Die Erfindung betrifft ein Verfahren und eine Kommunikationseinrichtung für eine Informationsübermittlung über eine CSTA-Schnittstelle gemäß dem Oberbegriff des Patentanspruchs 1 bzw. 8.

Computer Supported Telecommunication Applikation oder kurz CSTA ist eine Schnittstelle zur Kopplung von Datenverarbeitungseinrichtungen, z.B. einem Personal Computer PC, und Kommunikationseinrichtungen, z.B. einem Telefon. CSTA stellt dabei einen Standard dar, durch den ein Nachrichtenaufbau bzw. die Nachrichtenart für einen Nachrichtenaustausch zwischen Datenverarbeitungseinrichtung und Kommunikationseinrichtung für eine Realisierung verschiedenen kommunikationsspezifischer Leistungsmerkmale, wie z.B. Makeln, Rufumleitung, Konferenzschaltung usw. festlegt wird.

Gemäß den Standards ECMA-217, ECMA-218, ECMA-269 und ECMA-285 werden verschiede Versionen von CSTA unterschieden, die in diesem Dokument nachfolgend als CSTA-Phase II und CSTA-Phase III bezeichnet werden.

Für die Funktionalität einer CSTA-Anwendung kann es notwendig sein, daß die CSTA-Anwendung Informationen über kommunikationseinrichtungs-spezifische Zustände und Verbindungen erhält. Aus diesem Grund müssen einige oder alle der für die CSTA-Anwendung relevanten Kommunikationseinrichtungen - in der Literatur in diesem Zusammenhang als CSTA-Objekte bezeichnet - überwacht werden. Eine Zustandsänderung eines überwachten CSTA-Objektes, beispielsweise eines Kommunikationsendgerätes, wird dabei in Form einer Nachricht - eines sogenannten Rufereignisberichtes ('Call Event Report') - welche die Ursache einer Zustandsänderung (Cause) angibt, an die CSTA-Anwendung übermittelt - siehe dazu ECMA-218, Kap. 10.1 und KAP. 17; ECMA-217 Kap. 11.2.3 sowie ECMA-269, Kap. 17.2.

Der Rufereignisbericht kann dabei eine Verbindungsidentifikation enthalten, welche die an einem Ereignis beteiligten CSTA-Objekte identifiziert. Es können aber auch andere Parameter herangezogen werden, um relevante Objekte zu identifizieren.

Ereignisse bzw. Zustandsänderungen können von der Interaktion eines Rufes mit Verbindungsfunktionen ausgelöst werden. Diesen Verbindungsfunktionen und ihrer Aktivierung entsprechen in einem Rufereignisbericht Teile, die je nach CSTA-Phase unterschiedliche Werte aufweisen können.

Eine Ausnahme von der Regel, daß Rufereignisberichte Verbindungszustandsänderungen anzeigen, steht in Zusammenhang mit einer Warteschleife. Es ist möglich, daß ein Ruf in einer Warteschleife vorgezogen wird, ohne die Warteschleife zu verlassen und bei jeder Vorrückung einen Rufereignisbericht erzeugt.

Rufereignisberichte können sich des weiteren auf eine einzelne Verbindung, mehrere Verbindungen in einem Ruf, oder mehrere Verbindungen in mehreren Rufen beziehen.

Allgemein läßt sich sagen, daß ein Rufereignisbericht anzeigt, daß der Endzustand eines CSTA-Objektes erreicht ist, unabhängig von den vorhergegangenen Zuständen. Anfangszustände werden nur angegeben um den Rufereignisbericht in einen allgemeinen Telekommunikationszusammenhang zu stellen.

Bei der Versendung von Rufereignisberichten im Rahmen einer CSTA-Anwendung kann es vorkommen, daß sich der Rufereignisbericht einer CSTA-Phase formal von dem Rufereignisbericht einer anderen CSTA-Phase unterscheidet, obwohl die Rufereignisberichte eine identische Zustandsänderung beschreiben.

Bekannte CSTA-Anwendungen unterstützen jedoch nur eine CSTA-Phase und können daher nur den Rufereignisbericht dieser CSTA-Phase verstehen, was in der Praxis zu einer großen Einschränkung bei dem Einsatz von CSTA-Anwendungen führt.

Der vorliegenden Erfindung liegt daher die Aufgabe zugrunde, Maßnahmen anzugeben, durch die ein CSTA-Phasenunabhängiger Einsatz von CSTA-Anwendungen ermöglicht wird.

Die Aufgabe wird ausgehend vom Oberbegriff des Patentanspruchs 1 bzw. des Patentanspruchs 8 durch deren kennzeichnenden Merkmale gelöst.

Erfindungsgemäß wird eine Nachricht bereitgestellt, die aus zumindest zwei Teilen aufgebaut ist, wobei die Teile unterschiedlichen CSTA-Phasen zugeordnet werden.

Diese Lösung erlaubt die Realisierung von CSTA-Anwendungen, die unterschiedliche CSTA-Phasen unterstützen. Ein weiterer Vorteil der Erfindung besteht darin, daß dadurch eine einfache Anpassung neuer CSTA-Versionen bzw. Phasen an bestehende CSTA-Anwendungen vorgenommen werden kann.

Vorteilhafte Weiterbildungen der Erfindung sind in den Unteransprüchen angegeben.

Soll einer CSTA-Anwendung aktuelle Betriebszustände von Kommunikationsendgeräten eines Kommunikationssystems übermittelt werden, wird die Nachricht vorteilhafterweise als Rufereignisbericht erzeugt.

Eine günstige Ausführungsform der Erfindung besteht darin, daß die Nachricht in Form eines Feldes, welches zumindest eine Zelle aufweist, erzeugt wird, wobei die zumindest zwei Teile in zumindest eine Zelle geschrieben werden.

In einer bevorzugten Ausführungsform der Erfindung werden die Teile einem selben Ereignis zugeordnet.

Vorteilhafterweise werden die Teile, mit einem logischen 'Oder' verknüpft.

Eine günstige Ausführungsform der Erfindung sieht vor, daß überprüft wird, ob die Teile formal identisch sind, und daß im Fall formaler Identität die Teile mit einem logischen 'Und' verknüpft werden.

Zur Realisierung des erfindungsgemäßen Verfahrens eignet sich im besonderen eine Kommunikationseinrichtung bzw. ein Kommunikationssystem, welche dazu eingerichtet sind, eine Nachricht aus zumindest zwei Teilen zu erzeugen, die unterschiedlichen CSTA-Phasen zugeordnet sind.

Die Erfindung samt weiteren Vorteilen wird im folgenden anhand einiger nicht einschränkender Ausführungsbeispiele näher erläutert, die in der Zeichnung veranschaulicht sind.

Dabei zeigen:
- Fig. 1:: ein Strukturbild zur schematischen Darstellung eines erfindungsgemäßes Kommunikationssystem;
- Fig. 2:: eine schematische Darstellung eines Rufereignisberichts gemäß dem Stand der Technik;
- Fig. 3:: eine schematische Darstellung eines Rufereignisberichts der CSTA-Phase II gemäß dem Stand der Technik;
- Fig. 4:: eine schematische Darstellung eines Rufereignisberichts der CSTA-Phase III gemäß dem Stand der Technik; und
- Fig. 5:: eine schematische Darstellung eines erfindungsgemäßen Rufereignisberichts.

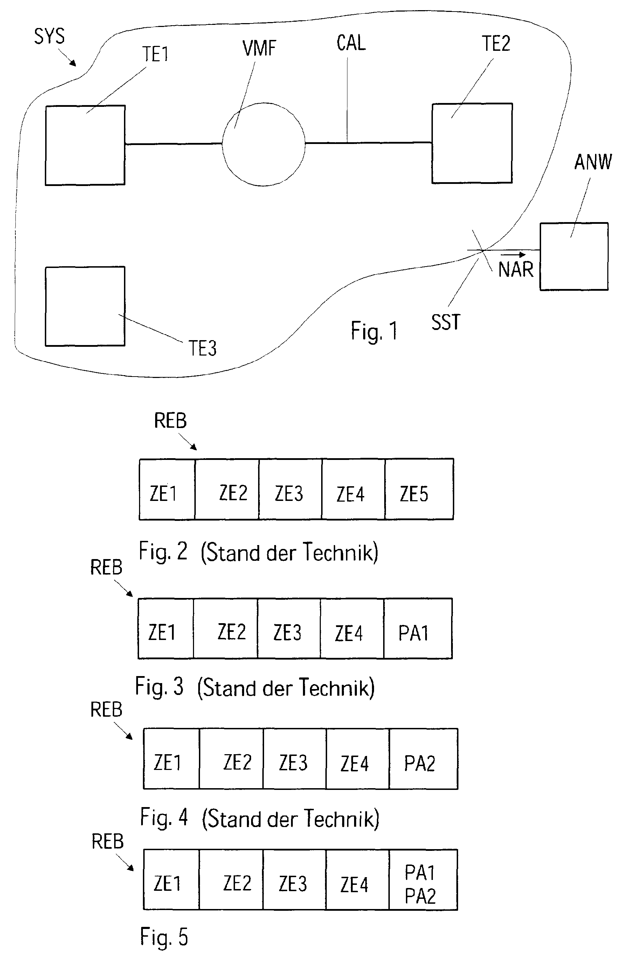

Fig. 1 zeigt in einer schematischen Darstellung ein erfindungsgemäßes Kommunikationssystem SYS mit einer CSTA-Schnittstelle SST zu einer CSTA-Anwendung ANW. Das Kommunikationssystem SYS umfaßt verschiedene CSTA-Objekte, z.B. ein erstes Kommunikationsendgerät TE1, welches einen Ruf CAL von einem zweiten Kommunikationsendgerät TE2 entgegennimmt. Der Ruf CAL kann zu einem dritten Kommunikationsendgerät TE3 umgeleitet werden, wobei zur Vermittlung des Rufes CAL im Kommunikationssystem SYS eine Vermittlungsfunktion VMF vorgesehen ist.

Um der CSTA-Anwendung ANW die für sie relevanten Informationen über die aktuellen Verbindungszustände der Kommunikationsendgeräte TE1, TE2, TE3 zur Verfügung stellen zu können, wird durch das Kommunikationssystem SYS für jedes der Kommunikationsendgeräte TE1, TE2, TE3 - d.h. für jedes CSTA-Objekt - eine erfindungsgemäße Nachricht NAR in Form eines Rufereignisberichtes erstellt und über die CSTA-Schnittstelle SST an die CSTA-Anwendung ANW übermittelt.

Nach Fig. 2 kann der Rufereignisbericht REB eines Kommunikationsendgerätes TE1, TE2, TE3 als Feld aufgebaut sein, welches aus Zellen ZE1,...,ZE5 besteht, wobei in den Zellen ZE1,...,ZE5 jeweils Parameter zur Zustandscharakterisierung des jeweiligen Kommunikationsendgerätes TE1, TE2, TE3 eingefügt sind.

Die erste Zelle ZE1 kann beispielsweise die letzte Verbindung des betrachteten Kommunikationsendgerätes TE1, TE2, TE3 enthalten, die zweite Zelle ZE2 eine Identifizierung für das Kommunikationsendgerät TE1, TE2, TE3, von welchem der Ruf umgeleitet wurde, die dritte Zelle ZE3 eine Identifizierung für das Kommunikationsendgerät TE1, TE2, TE3, zu welchem der Ruf umgeleitet wurde, die vierte Zelle ZE4 den lokalen Verbindungszustand des betrachteten Kommunikationsendgerätes TE1, TE2, TE3 und die fünfte Zelle ZE5 die Ursache für den aktuellen Verbindungszustand.

Unterschiedliche CSTA-Phasen können, wie bereits eingangs erwähnt, Rufereignisberichte REB unterschiedlicher Form erzeugen.

Fig. 3 zeigt eine schematische Darstellung eines Rufereignisberichts REB nach der CSTA-Phase II. Hierbei enthält die Zelle ZE5, in der die Ursache des aktuellen Verbindungszustandes angegeben ist, einen Teil PA1.

Fig. 4 zeigt eine schematische Darstellung eines Rufereignisberichts REB nach der CSTA-Phase III. Hierbei enthält die Zelle ZE5, in der ebenfalls die Ursache des aktuellen Verbindungszustandes angegeben ist, einen Teil PA2. Der Teil PA1 gemäß CSTA-Phase II unterscheidet sich formal von dem entsprechenden Teil PA2 in dem Rufereignisbericht REB für die CSTA-Phase III. Somit sind diese Rufereignisberichte REB phasenabhängig und nur für diejenige CSTA-Anwendung verständlich, welche die jeweilige CSTA-Phase II oder die CSTA-Phase III unterstützt.

Beispielsweise besteht der Teil PA1 gemäß der CSTA-Phase II, der in der Zelle für die Ursache des aktuellen Verbindungszustandes eingetragen ist, aus dem Wert "busy" falls ein Verbindungsaufbau mit dem betreffenden Kommunikationsendgerät TE1, TE2, TE3 momentan nicht möglich ist. Nach der CSTA-Phase III besteht der Teil PA2, der die selbe Situation beschreibt aus dem Wert "not reachable"

Fig. 5 zeigt nun eine schematische Darstellung eines erfindungsgemäßen Rufereignisberichtes ERB. Hierbei enthält die Zelle ZE5, welche sowohl die CSTA-Phase II als auch die CSTA-Phase III unterstützt, zwei Teile PA1, PA2 mit der identischen Information, wobei jeder CSTA-Phase einer der Teile PA1, PA2 zugeordnet ist.

Die beiden Parameter PA1, PA2 können mit einem logischen 'Oder' verknüpft werden, damit bei einer logischen "Oder-Abfrage" durch die CSTA-Anwendung die von ihr lesbare Form ausgewählt werden kann.

Der erfindungsgemäße Rufereignisbericht REB für die in Fig. 3 und Fig. 4 beschriebene Situation weist daher in der Zelle ZE5 für die Ursache des aktuellen Verbindungszustandes eine Zustandsmeldung der Form "busy Oder not reachable" auf. Sind die beiden Teile PA1, PA2 auch formal identisch so können sie auch mit einem logischen 'Und' verbunden sein.

## Patentansprüche

1. Verfahren zum Erzeugen einer Nachricht (NAR) die zwischen einer Kommunikationseinrichtung (SYS)und einer CSTA-Anwendung (ANW) über eine CSTA-Schnittstelle (SST) ausgetauscht wird,
**dadurch gekennzeichnet,**
**daß** die Nachricht (NAR) aus zumindest zwei Teilen (PA1, PA2) aufgebaut wird, die unterschiedlichen CSTA-Phasen zugeordnet werden.

2. Verfahren nach Anspruch 1,
**dadurch gekennzeichnet,**
**daß** die Nachricht (NAR) zum Aufbau und Verwalten von Verbindungen mit der Kommunikationseinrichtung (SYS) dient.

3. Verfahren nach Anspruch 1 oder 2,
**dadurch gekennzeichnet,**
**daß** die Nachricht (NAR) als Rufereignisbericht (REB) erzeugt wird.

4. Verfahren nach einem der Ansprüche 1 bis 3,
**dadurch gekennzeichnet,**
**daß** die Nachricht (NAR) in Form eines Feldes, welches zumindest eine Zelle (ZE1, ZE2, ZE3, ZE4, ZE5) aufweist, erzeugt wird, wobei die zumindest zwei Teile (PA1, PA2) in zumindest eine Zelle (ZE1, ZE2, ZE3, ZE4, ZE5) geschrieben werden.

5. Verfahren nach einem der Ansprüche 1 bis 4,
**dadurch gekennzeichnet,**
**daß** die Teile (PA1, PA2) einem selben Ereignis zugeordnet werden.

6. Verfahren nach einem der Ansprüche 1 bis 5,
**dadurch gekennzeichnet,**
**daß** die Teile (PA1, PA2) mit einem logischen Oder verknüpft werden.

7. Verfahren nach einem der Ansprüche 1 bis 6,
**dadurch gekennzeichnet,**
**daß** überprüft wird, ob die Teile (PA1, PA2) formal identisch sind, und diese in dem Fall formaler Identität mit einem logischen Und verknüpft werden.

8. Kommunikationseinrichtung (SYS), welche über eine CSTA-Schnittstelle (SST) mit einer CSTA-Anwendung (ANW) in Verbindung steht, wobei zwischen der Kommunikationseinrichtung (SYS) und der CSTA-Anwendung (ANW) über die CSTA-Schnittstelle (SST) zumindest eine Nachricht (NAR) ausgetauscht wird,
**dadurch gekennzeichnet,**
**daß** die Kommunikationseinrichtung (SYS) dazu eingerichtet ist, die Nachricht (NAR) aus zumindest zwei Teilen (PA1, PA2) zu erzeugen, die unterschiedlichen CSTA-Phasen (PII, PII) zugeordnet sind.

9. Kommunikationseinrichtung (SYS) nach Anspruch 8,
**dadurch gekennzeichnet,**
**daß** die zumindest eine Nachricht (NAR) zum Aufbau und Verwalten von Verbindungen mit der Kommunikationseinrichtung (SYS) dient.

10. Kommunikationseinrichtung (SYS) nach Anspruch 8 oder 9,
**dadurch gekennzeichnet,**
**daß** die Kommunikationseinrichtung (SYS) dazu eingerichtet ist, die Nachricht (NAR) als Rufereignisbericht (REB) zu erzeugen.

11. Kommunikationseinrichtung (SYS) nach einem der Ansprüch 8 oder 10,
**dadurch gekennzeichnet,**
**daß** die Kommunikationseinrichtung (SYS) dazu eingerichtet ist, die Nachricht (NAR) in Form eines Feldes, welches zumindest eine Zelle (ZE1, ZE2, ZE3, ZE4, ZE5) aufweist, zu erzeugen, wobei die zumindest zwei Teile (PA1, PA2) in zumindest einer Zelle (ZE1, ZE2, ZE3, ZE4, ZE5) angeordnet sind.

12. Kommunikationseinrichtung (SYS) nach einem der Ansprüche 8 bis 11,
**dadurch gekennzeichnet,**
**daß** die Kommunikationseinrichtung (SYS) dazu eingerichtet ist, zumindest zwei einem selben Ereignis zugeordnete Teile (PA1, PA2) der Nachricht (NAR) zu erzeugen.

13. Kommunikationseinrichtung (SYS) nach einem der Ansprüche 8 bis 12,
**dadurch gekennzeichnet,**
**daß** die Kommunikationseinrichtung (SYS) dazu eingerichtet ist, die Teile (PA1, PA2) mit einem logischen Oder zu verknüpfen.

14. Kommunikationseinrichtung (SYS) nach einem der Ansprüche 8 bis 13,
**dadurch gekennzeichnet,**
**daß** die Kommunikationseinrichtung (SYS) dazu eingerichtet ist, zu überprüfen, ob die Teile (PA1, PA2) formal identisch sind, und diese in dem Fall formaler Identität mit einem logischen Und zu verknüpfen.

15. Kommunikationseinrichtung (SYS) nach einem der Ansprüche 8 bis 14,
**dadurch gekennzeichnet,**
**daß** die Kommunikationseinrichtung (SYS) ein Kommunikationssystem ist.
